Europäisches Patentamt

European Patent Office

Office européen des brevets

(19)

(11) Publication number: **0 224 484**
B1

(12) **EUROPEAN PATENT SPECIFICATION**

(45) Date of publication of patent specification: **03.10.90**

(21) Application number: **85903681.6**

(22) Date of filing: **26.07.85**

(86) International application number:
**PCT/GB85/00334**

(87) International publication number:
**WO 86/00915 13.02.86 Gazette 86/04**

(51) Int. Cl.⁵: **C 09 D 5/18, C 09 K 21/14,
C 08 J 7/04, B 32 B 27/04,
C 08 L 61/20**

(54) **ADHESIVE OR CEMENT.**

(30) Priority: **26.07.84 GB 8419040**

(43) Date of publication of application:
**10.06.87 Bulletin 87/24**

(45) Publication of the grant of the patent:
**03.10.90 Bulletin 90/40**

(84) Designated Contracting States:
**AT BE CH DE FR IT LI LU NL SE**

(56) References cited:
**AU-B-4 343 168
DE-A-2 653 740
GB-A-2 095 683
GB-A-2 147 597
US-A-3 925 137
US-A-4 210 725
US-A-4 269 944**

(73) Proprietor: **DIXON INTERNATIONAL LIMITED
Pampisford Cambridge CB2 4HG (GB)**

(72) Inventor: **MALCOLM-BROWN, Tessa
Pampisford Court Pampisford
Cambridge CB2 4HG (GB)**

(74) Representative: **Seaborn, George Stephen et al
c/o Edward Evans & Co. Chancery House 53-64
Chancery Lane
London WC2A 1SD (GB)**

Courier Press, Leamington Spa, England.

## Description

The present invention relates to the use of intumescent material as an adhesive or cement.

It is well known that intumescent material may comprise:

a carbonific;

a spumific;

an activator or catalyst for the carbonific; and

a resin binder.

When the intumescent material is subjected to elevated temperature, as under fire conditions, the material intumesces, i.e. expands, to form a solid foam. Several reactions occur in intumescence. Essentially the carbonific reacts with the activator to form a carbon residue or char. The spumific decomposes to form large quantities of gas, which cause the carbon residue to foam to form a protective mass. The resin binder softens or melts and inhibits escape of gas from the foam.

Our British patent no. 1601131 discloses an intumescent material comprising:

a polyhydroxy compound as carbonific;

an ammonium phosphate as activator for the carbonific;

polyvinyl acetate as resin binder;

melamine formaldehyde resin crosslinked by a polyamido compound as further resin binder and spumific;

a water-hardened setting agent; and

fibrous reinforcing material.

The intumescent material is made by preparing an aqueous composition or mixture of the polyhydroxy compound, water-dispersible polyvinyl acetate, water-dispersible melamine formaldehyde resin, polyamido compound, ammonium phosphate, water-hardenable setting agent and fibrous reinforcing material, and allowing the mixture to harden.

We have now found that such an aqueous composition constitutes an excellent adhesive or cement.

We do not believe that the fibrous reinforcing material, and water-hardenable setting agent are essential ingredients of the aqueous composition if it is to be used as an adhesive or cement.

The melamine formaldehyde resin may be replaced by urea formaldehyde resin.

Accordingly, in a first aspect of the present invention there is provided a method of making a laminate or composite comprising interposing between two or more laminae and in contact therewith an aqueous composition of at least 3% by weight of pentaerythritol a sugar or starch or at least 15% by weight of an ammonium phosphate, water-dispersible polyvinyl acetate, at least 15% by weight of a water-dispersible melamine formaldehyde or urea formaldehyde resin and at least 5% by weight of a polyamido compound, the afore-mentioned percentages being based on the dry weight of the composition, and allowing the composition to harden in contact with said laminae thereby to provide between the laminae at least one layer of intumescent material which adheres or cements to said laminae together.

The liquid cement composition may further comprise fibrous reinforcing material and/or water-hardenable setting agent. The formaldehyde resin acts as binder and the polyvinyl acetate acts as additional binder to provide with the formaldehyde resin an interpenetrating polymer network thereby making the intumescent material less brittle.

In the method of the invention the various essential and optional compounds or ingredients of the liquid composition and their proportions (when present in the case of the optional compounds or ingredients) may preferably be substantially as described in our British patent no. 1601131.

The ammonium phosphate may be monoammonium dihydrogen phosphate, diammonium hydrogen phosphate or ammonium polyphosphate and is preferably monoammonium dihydrogen phosphate.

The polyamido compound, which acts as crosslinking agent for the formaldehyde resin, is preferably dicyandiamide or guanidine.

The polyamido compound also acts as spumific whether in free form or chemically combined with the formaldehyde resin.

The setting agent, if present, is preferably plaster of Paris ($Ca_2SO_4 \cdot \frac{1}{2}H_2O$) or Portland cement.

The fibrous reinforcing material, if present, may be wood flour, hammer-milled glass fibres or disintegrated nylon fibres.

Preferably the composition comprises, at least, 1%, more preferably at least 2%, by weight of the polyvinyl acetate, based on the dry weight of the composition.

The preferred proportions of ingredients of the liquid cement compositions are given below, parts by weight being based on a total of 100 parts by weight of the polyhydroxy compound (i.e. the pentaerythritol, the sugar or the starch), the ammonium phosphate, the formaldehyde resin and the polyamido compound.

The liquid cement composition preferably comprises:

5 to 15 parts by weight of the organic polyhydroxy compound;

20 to 45 parts by weight of the ammonium phosphate;

20 to 45 parts by weight of the formaldehyde resin; and

10 to 25 parts by weight of the polyamido compound.

Preferably also the liquid cement composition comprises up to 5, more preferably 2 to 5 parts by weight of the polyvinyl acetate on the basis referred to above.

The liquid composition may preferably comprise 5 to 15 parts by weight of water-hardenable setting agent on the basis referred to above.

The fibrous reinforcing material, if present, is preferably present in an amount of up to 5 parts on the basis referred to above.

The liquid cement composition may comprise sodium silicate. The amount of sodium silicate (if present) relative to other ingredients of the composition is preferably as set out in our British patent application no. 8421431 (2147597A), to which reference may be made. In particular the amount of sodium silicate is preferably in the range of 8.9% to 32.6%, more preferably 11.9% to 29.6%, by weight based on the ammonium phosphate and the pH of the liquid composition is not above 6.2, more preferably 6.1.

We have found that the method of the invention may be used to adhere together laminae of similar or dissimilar substrates of a wide variety of materials. Such substrates include wood (e.g. plywood or wood veneer), hardboard, plastic laminates, steel, rock wool, incombustible boards such as mineral fibre board and autoclaved calcium silicate board, expanded polymeric materials (e.g. expanded styrene polymers such as polystyrene) and fluorocarbon polymers (e.g. polytetrafluoroethylene (ptfe)).

Bonding of steel to rock wool, which has hitherto been difficult to effect satisfactorily, can be easily and most satisfactorily effected by means of the present invention.

The invention may be used in manufacturing items, such as doors and wall panels, which desirably contain intumescent material for the purpose of making the items resistant to fire.

The invention is particularly useful in the manufacture of fire or flame-resistant laminated or composite structures such as fire doors and wall panels.

The laminae may be of wood, such as plywood and a sheet of expanded polymer or wood strips may be interposed between the wood panels. The laminate or composite may be used, for example, as a door, the expanded polymer forming a heat and sound insulating core of the door.

The liquid cement composition as described above, on hardening, even adheres to materials such as polytetrafluoroethylene (ptfe) and other fluorocarbon polymers, to which conventional adhesives do not adhere. The invention may thus be used in bonding fluorocarbon polymer substrates together or to other substrates and in coating fluorocarbon polymer bodies with intumescent material. Preferably the surface of the ptfe or other fluorocarbon polymer is treated or roughened by, e.g. etching, oxidation, sand blasting, sand papering or making small indentations therein before the application of liquid cement composition thereto in order to enhance the adhesion of the hardened composition to the polymer.

Accordingly, in a second aspect of the invention, there is provided a method of providing an adherent intumescent coating or layer on a surface of a body, which surface is a polytetrafluorethylene or other fluorocarbon polyer, which method comprises applying to the surface an aqueous composition as specified above with reference to the first aspect of the invention and allowing the composition to harden in contact with the surface to provide the intumescent coating or layer.

The expanded polymer may be an expanded styrene polymer such as polystyrene.

The invention is illustrated by the following Example and with reference to the accompany-ing drawings.

Example

The following composition was made as a dry powder:

| | |
|---|---|
| Pentaerythritol | 800 g |
| Melemine formaldehyde resin (water-dispersible) | 3800 g |
| Dicyandiamde | 2000 g |
| Monoammonium phosphate | 4200 g |
| Polyvinyl acetate (water-dispersible) | 150 g |
| Plaster of Paris | 1100 g |
| Wood flour (passing through 90 mesh) | 250 g |

Water (2400 g) was mixed with the dry powder to form a slurry.

The slurry was applied to wood and etched/ oxidized ptfe substrates and allowed to harden. It was found that the hardened slurry adhered tenaciously to the wood substrates and adhered also to the ptfe substrates.

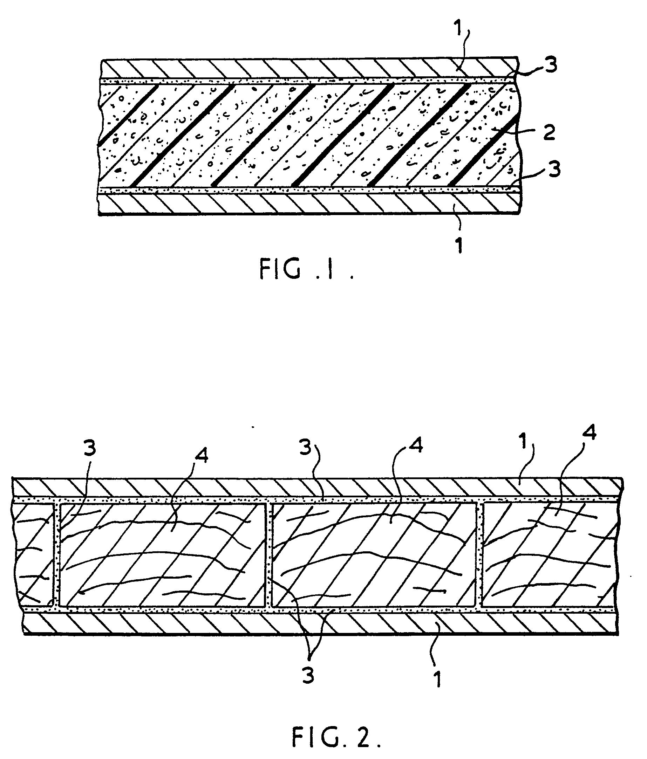

Parts of a laminate and a composite suitable for use (when cut to the appropriate size) as a fire door or wall panel are shown in section in Figures 1 and 2 of the drawing.

Referring to Figure 1, the laminate consists of two plywood (the individual plies not being shown in the drawing) or wood veneer panels 1 bonded on either side of an expanded polystyrene sheet 2. The panels 1 are bonded to the sheet 2 by the method of the invention using a slurry prepared as described in the Example above. A layer of the slurry is interposed between the sheet 2 and each panel 1 and allowed to harden in contact with the sheet 1 and the panels 2 (with the sheet 1 and the panels 2 held in their desired final relative positions) so as to form hardened layers 3 of intumescent material cementing the panels 1 to the sheet 2, which forms the core of the door.

On subjecting one side of the laminate to flame, the wood panel 1 at that side chars and burns but the adjoining layer 3 of intumescent material protects the sheet 2 (which by itself would be highly flammable) from the heat of the flame for a prolonged period because the intumescent material intumesces endo-thermically and the resulting foamed intumesced material is of low thermal conductivity (i.e. it is thermally insulating).

Referring to Figure 2, a composite is similar to the laminate of Figure 1, except that between the plywood or wood veneer panels 1 are provided woodstrips or blocks 4 (shown in cross section in the Figure). The strips or blocks 4 and the panels 1 are bonded together by the method of the invention using a slurry prepared as described in the example above. The slurry is applied to the surfaces of the strips or blocks 4 and the inward facing surfaces of the panels 1 and allow to harden with the strips of blocks 4 and the panels 1 held in their desired final relative positions so as to form hardened layers 3 of intumescent material cementing the strips or blocks 4 and the panels 1 together. The strips or blocks 4 thus form the core of the door. On subjecting one side of the composite to flame, the wood panel 1 at that side chars and burns out but the adjoining layer 3 of intumescent material protects the strips or blocks 4 from the heat of the flame for a prolonged period in the same manner as the intumescent material protects the sheet 2 of the laminate of Figure 1 from the heat of the flame.

## Claims

1. A method of making a laminate or composite comprising interposing between two or more laminae and in contact therewith an aqueous composition comprising at least 3% by weight of pentaerythritol a sugar or starch, at least 15% by weight of an ammonium phosphate, water-dispersible polyvinyl acetate, at least 15% by weight of a water-dispersible melamine formaldehyde or urea formaldehyde resin and at least 5% by weight of a polyamido compound, the aforementioned percentages being based on the dry weight of the composition, and allowing the composition to harden in contact with said laminae thereby to provide between the laminae at least one layer of intumescent material which adheres or cements said laminae together.

2. A method according to claim 1, wherein the ammonium phosphate is monoammonium phosphate.

3. A method according to either preceding claim, wherein the polyamido compound is dicyandiamide or guanidine.

4. A method according to any preceding claim, wherein the aqueous composition further comprises a water-hardenable setting agent.

5. A method according to claim 4, wherein the setting agent is plaster of Paris (Ca$_2$SO$_4 \cdot \frac{1}{2}$H$_2$O) or Portland cement.

6. A method according to any preceding claim, wherein the liquid cement composition further comprises fibrous reinforcing material.

7. A method according to claim 6, wherein the fibrous reinforcing material is constituted by wood flour, hammer-milled glass fibres or disintegrated nylon fibres.

8. A method according to any preceding claim, wherein the polyvinyl acetate is present in the aqueous composition in an amount of at least 1% by weight based on the dry weight of the composition.

9. A method according to any preceding claim, wherein at least one of the laminae is of hardboard, wood, plastic, steel, rock wool, expanded polymeric material or fluorocarbon polymer or is an incombustible board.

10. A method according to any preceding claim, wherein the laminae are wood panels and a sheet of expanded polymer or wood strips is/are disposed between the wood panels.

11. A method of providing an adherent intumescent coating or layer on a surface of a body, which surface is of polytetrafluorethylene or other fluorocarbon polymer, which method comprises applying to the surface an aqueous composition as specified in claim 1 and allowing the composition to harden in contact with the surface to provide the intumescent coating or layer.

12. A method according to claim 11, wherein the ammonium phosphate is monoammonium phosphate.

13. A method according to either of claims 11 and 12, wherein the polyamido compound is dicyandiamide or guanidine.

14. A method according to any of claims 11 to 13, wherein the aqueous composition further comprises a water-hardenable setting agent.

15. A method according to claim 14, wherein the setting agent is plaster of Paris (Ca$_2$SO$_4 \cdot \frac{1}{2}$H$_2$O) or Portland cement.

16. A method according to any of claims 11 to 15, wherein the liquid cement composition further comprises fibrous reinforcing material.

17. A method according to claim 16, wherein the fibrous material is constituted by wood flour, hammer-milled glass fibres or disintegrated nylon fibres.

18. A method according to any of claims 11 to 17, wherein the polyvinyl acetate is present in the liquid cement composition in an amount of at least 1% by weight based on the dry weight of the composition.

19. A method according to any of claims 11 to 18, wherein the liquid cement composition is allowed to harden in contact with another surface so as to adhere or cement the two surfaces together.

## Patentansprüche

1. Verfahren zur Herstellung einer Schichtenanordnung oder-verbindung, bei welchem man zwischen zwei oder mehr Schichten und in Kontakt mit diesen eine wässrige Mischung einbringt, welche mindestens drei Gewichsprozent Pentaerithritol, Zucker oder Stärke, mindestens 15 Gewichsprozent Ammoniumphosphat, in Wasser dispergierbares Polivinylacetat, mindestens 15 Gewichtsprozent eines in Wasser dispergierbaren Melaminformaldehyds oder Harnsäureformaldehydharzes und mindestens 5 Gewichtsprozent einer Polyamidverbindung enthält, wobei die vorgenannten Prozentsätze auf dem Trockengewicht der Mischung basieren, und bei welchem man die Mischung in Kontakt mit den Schichten erhärten läßt und dadurch zwischen diesen Schichten mindestens eine weitere Schicht eines schaumfähigen Materials schafft, welches die erstgenannten Schichten zusammenklebt bzw. verkittet.

2. Verfahren nach Anspruch 1, bei welchem das Ammoniumphosphat Monoammoniumphosphat ist.

3. Verfahren nach Anspruch 1 oder 2, bei welchem die Polyamidverbindung Dicyandiamid oder Guanidin ist.

4. Verfahren nach einem der vorhergehenden Ansprüche, bei welchem die wässrige Mischung weiterhin noch ein in Wasser härtbares Erstarrungsmittel enthält.

5. Verfahren nach Anspruch 4, bei welchem das Erstarrungsmittel gebrannter Gips (Ca$_2$SO$_4$·$\frac{1}{2}$H$_2$O) oder Portlandzement ist.

6. Verfahren nach einem der vorhergehenden Ansprüche, bei welchem die flüssige Zementmischung noch zusätzlich faserförmiges Verstärkungsmaterial enthält.

7. Verfahren nach Anspruch 6, bei welchem das faserförmige Verstärkungsmaterial gebildet ist durch Holzmehl, zerkleinerte Glasfasern oder aufgelöste Nylonfasern.

8. Verfahren nach einem der vorhergehenden Ansprüche, bei welchem das Polyvenylazetat in der wässrigen Mischunng in einer Menge von wenigstens ein Gewichtsprozent, basierend auf dem Trockengewicht der Mischung, vorhanden ist.

9. Verfahren nach einem der vorhergehenden Ansprüche, bei welchem midestens eine der Schichten gebildet ist aus Hartfaserplatte, Holz, Plastik, Stahl, Steinwolle, expandiertes Polymer-Material oder Fluorkohlenstoffpolymer oder unbrennbarer Pappe.

10. Verfahren nach einem der vorhergehenden Ansprüche, bei welchem die Schichten Holzplatten sind und eine Scheibe eines expandierten Polymers oder Holzstreifen zwischen den Holzlatten angeordnet ist bzw. sind.

11. Verfahren zur Schaffung eines klebenden, schaumförmigen, Überzugs oder Schicht auf der Oberfläche eines Körpers, die aus Polytetrafluoräthylen oder einem anderen Fluorkohlenwasserstoffpolymer ist, bei welchem man auf die Oberfläche eine wässrige Mischung gemäß Anspruch 1 aufbringt und die Mischung in Kontakt mit der Oberfläche erhärten laßt, um einem schaumfähigen Überzug oder Schicht zu schaffen.

12. Verfahren nach Anspruch 11, bei welchem das Ammoniumphorphosphat Monoammoniumphosphat ist.

13. Verfahren nach einem der Ansprüche 11 und 12, bei welchem die Polyamidverbindung Dicyandiamid oder Guanidin ist.

14. Verfahren nach einem der Ansprüche 11—13, bei welchen die wässrige Mischung zusätzlich ein in Wasser härtbares Erstarrungsmittel enthält.

15. Verfahren nach Anspruch 14, bei welchem das Erstarrungsmittel Gips (Ca$_2$SO$_4$·$\frac{1}{2}$H$_2$O) oder Portlandzement ist.

16. Verfahren nach einem der Ansprüche 11—15, bei welchem die flüssige Zementmischung weiterhin faserförmiges Verstärkungsmaterial enthält.

17. Verfahren nach Anspruche 16, bei welchem das faserförmige Verstärkungsmaterial gebildet ist durch Holzmehl, zerkleinerte Glasfasern oder aufgelöste Nylonfasern.

18. Verfahren nach einem der Ansprüche 11—17, bei welchem das Polyvenylacetat in der flüssigen Zementmischung in einer Menge von wenigstens 1 Gewichtsprozent, basierend auf dem Trockengewicht der Mischung, vorhanden ist.

19. Verfahren nach einem der Ansprüche 11—18, bei welchem man die flüssige Zementmischung in Kontakt mit eineranderen Oberfläche erhärten läßt, so daß sie die zwei Overflächen zusammenklebt bzw. verkittet.

**Revendications**

1. Procédé pour la fabrication d'un lamifié ou d'un composite, consistent à interposer entre deux ou plusieurs lamifiés et en contact avec ces derniers, une composition aqueuse comprenant au moins 3% en poids de pentaérythritol, un sucre ou un amidon; au moins 15% en poids d'un phosphate d'ammonium; de l'acétate de polyvinyle dispersible dans l'eau; au moins 15% en poids d'une résine mélamine-formaldéhyde ou urée-formaldéhyde dispersible dans l'eau et au moins 5% en poids d'un composé polyamide, les pourcentages susmentionnés étant basés sur le poids à sec de la composition; et laisser la composition se durcir en contact avec ces lamifiés fournissant ainsi, entre les lamifiés, au moins une couche de matière intumescente qui colle ou cimente ces lamifiés l'un à l'autre.

2. Procédé selon la revendication 1, dans lequel le phosphate d'ammonium est le phosphate de monoammonium.

3. Procédé selon l'une quelconque des revendications précédentes, dans lequel le composé polyamide est le dicyandiamide ou la guanidine.

4. Procédé selon l'une quelconque des revendications précédentes, dans lequel la composition aqueuse comprend, en outre, un agent de durcissement hydrodurcissable.

5. Procédé selon la revendication 1, dans lequel l'agent de durcissement est la plâte de Paris (Ca$_2$SO$_4$·$\frac{1}{2}$H$_2$O) ou le ciment Portland.

6. Procédé selon l'une quelconque des revendications précédentes, dans lequel la composition de ciment liquide comprend, en outre, une matière fibreuse de renforcement.

7. Procédé selon la revendication 6, dans lequel la matière fibreuse de renforcement est constituée de farine de bois, de fibres de verre broyées au marteau ou de fibres de nylon désintégrées.

8. Procédé selon l'une quelconque des revendications précédentes, dans lequel l'acétate de polyvinyle est présent dans la composition aqueuse en une quantité d'au moins 1% en poids, basé sur le poids à sec de la composition.

9. Procédé selon l'une quelconque des revendications précédentes, dans lequel au moins un des lamifiés est constitué d'un panneau dur, de bois, de plastique, d'acier, de laine de roche, de matière polymère expansée ou d'un polymère fluor-carboné ou encore, constitue un panneau incombustible.

10. Procédé selon l'une quelconque des revendications précédentes, dans lequel les lamifiés sont constitués de panneaux de bois, une feuille de polymère expansé ou des bandes de bois est/sont disposée(s) entre les panneaux de bois.

11. Procédé destiné à fournir une couche ou un revêtement intumescent adhésif sur une surface d'un corps, cette surface étant constituée de poly-tétrafluoroéthylène ou d'un autre polymère fluorocarboné, ce procédé consistant à appliquer à la surface, une composition aqueuse telle que spécifiée dans la revendication 1 et laisser la composition se durcir en contact avec la surface pour obtenir la couche ou le revêtement intumescent.

12. Procédé selon la revendication 11, dans lequel le phosphate d'ammonium est le phosphate de monoammonium.

13. Procédé selon l'une quelconque des revendications 11 et 12, dans lequel le composé polyamide est le dicyandiamide ou la guanidine.

14. Procédé selon l'une quelconque des revendications 11 à 13, dans lequel la composition aqueuse comprend, en outre, un agent de durcissement hydro-durcissable.

15. Procédé selon la revendication 14, dans lequel l'agent de durcissement est la plâtre de Paris ($Ca_2SO_4 \cdot \frac{1}{2}H_2O$) ou le ciment Portland.

16. Procédé selon l'une quelconque des revendications 11 à 15, dans lequel la composition de ciment liquide comprend, en outre, une matière fibreuse de renforcement.

17. Procédé selon la revendication 16, dans lequel la matière fibreuse de renforcement est constituée de farine de bois, de fibres de verre broyées au matreau ou de fibres de nylon désintégrées.

18. Procédé selon l'une quelconque des revendications 11 à 17, dans lequel l'acétate de polyvinyle est présent dans la composition aqueuse en une quantité d'au moins 1% en poids, basé sur le poids à sec de la composition.

19. Procédé selon l'une quelconque des revendications 11 à 18, dans lequel on laisse se durcir la composition de ciment liquid en contact avec une autre surface, afin de coller ou de cimenter les deux surfaces i'une à l'ature.

FIG .1 .

FIG. 2.